# EUROPEAN PATENT SPECIFICATION

(11) **EP 4 420 096 B1**
(45) Date of publication and mention of the grant of the patent: **28.01.2026**
(21) Application number: 22801409.8
(22) Date of filing: 10.10.2022
(51) Int. Cl.: G07C 9/00, B62D 15/02, G01S 13/74

(54) **CONTROL SYSTEM FOR A VEHICLE**
STEUERUNGSSYSTEM FÜR EIN FAHRZEUG
SYSTÈME DE COMMANDE POUR VÉHICULE

(30) Priority: 22.10.2021 GB 202115209
(43) Date of publication of application: 28.08.2024
(73) Proprietor: Jaguar Land Rover Limited, Coventry, Warwickshire CV3 4LF (GB)
(72) Inventor: PATEL, Jitesh, Coventry Warwickshire CV3 4LF (GB); WOOLLISCROFT, Daniel, Coventry Warwickshire CV3 4LF (GB); PETTINGER, David, Coventry Warwickshire CV3 4LF (GB); WADDELL, David, Coventry Warwickshire CV3 4LF (GB); SISWICK, Howard, Coventry Warwickshire CV3 4LF (GB); HONORE, Guillaume, Coventry Warwickshire CV3 4LF (GB)
(74) Representative: Jaguar Land Rover Patents Department
(86) International application number: PCT/EP2022/078134
(87) International publication number: WO 2023/066705

(56) References cited:
- WO-A1-2018/125086
- US-A1- 2003 222 758
- US-A1- 2020 384 951

## Description

### TECHNICAL FIELD

The present disclosure relates to a control system for a vehicle. Aspects of the invention relate, particularly but not exclusively, to a control system, to a method for determining range from a vehicle to a portable access device, to a ranging system, to an electronic control unit for a vehicle and to a vehicle.

### BACKGROUND

It is known to provide vehicles capable of performing certain autonomous operations or manoeuvres. These autonomous operations may comprise operations such as a park-out manoeuvre or a remote parking manoeuvre. Such operations may be implemented by the driver via a mobile application on their personal communication device. However, regulations relating to autonomous manoeuvres may specify certain requirements. For example, if any mishap happens, the driver must be close enough to the vehicle to be able to take control of the vehicle or the driver must be in the visible range of vehicle.

WO2018/125086 discloses methods and apparatus to adjust an advertising rate of a device to reduce battery usage. An example method includes determining a distance of a device from a vehicle based on a signal, determining a state of motion of the device, and adjusting an advertising rate of the signal based on the distance and state of motion.

US2020/384951 discloses a vehicle access system which includes an identification device with a first transceiver, a short-range transceiver and a processor configured to control the first transceiver and the short-range transceiver to activate the first transceiver only when a distance measurement between the identification device and a vehicle is within a predefined range as determined utilizing the short-range transceiver.

US2003/222758 discloses a vehicle security sub-system comprising person sensing means arranged to determine whether a person is located in the vehicle, first authorisation device detection means arranged to detect the presence of a cooperating authorisation device having a first level of authorisation in the vehicle, a second authorisation device detection means arranged to detect the presence of a cooperating authorisation device in an area around the driver's seat and a controller, wherein, the controller is arranged to determine the locked state of at least one vehicle closure and the state of a start system of an associated vehicle in response to inputs from the detection means.

It is an aim of the present invention to address one or more of the disadvantages associated with the prior art.

### SUMMARY OF THE INVENTION

Aspects and embodiments of the invention provide a control system, a method for determining range from a vehicle to a portable control device, a ranging system, an electronic control unit for a vehicle and a vehicle as claimed in the appended claims.

The polling rate may be higher while the vehicle is in motion than when the vehicle is stationary. The polling rate while the vehicle is in motion may be between 150ms and 350ms, optionally 250ms. The polling rate while the vehicle is stationary is between 400ms and 1500ms, optionally 500ms or 1000ms.

In an embodiment the autonomous manoeuvre may have five potential states: a standby state, start-up state, a manoeuvring state, an interrupted state, and a finishing state. Optionally in the standby state no action is taken in relation to determining the range to the portable control device. The scan signals bay be emitted at a first rate in the start-up state, the first rate being between 400ms and 1500ms, and in an example is 1000ms. In the start-up state the scan signals may be stopped as soon as a scan response signal indicates that there is a portable control device within the range of the scan signals.

In the manoeuvring state the vehicle may be carrying out an autonomous manoeuvre, and the scan signals may be emitted at a second rate, which is faster than the first rate used in the start-up state. The second rate bay be between 150ms and 350ms, optionally 250ms, and wherein if the control system determined that the electronic control unit is outside a desired range, or is inside the vehicle, the manoeuvre will be stopped.

In the interrupted state, the autonomous manoeuvre has been stopped before completion, and the scan signals may be emitted at a third rate for a predefined period of time and then stopped, the third rate being slower than the second rate and optionally the same as the first rate.

In the finishing state, which is applicable for park-out manoeuvres where the vehicle autonomously exits its parking place, the control system may determine that the portable control device is located inside the vehicle using scan signals at the first rate or the third rate. In an embodiment, the range request signal comprises configuration data for configuring the scan signal. Optionally, the scan signal may comprise a plurality of regularly repeating scan signals. The configuration data may comprise rate data for the repetition rate of the scan signals and may comprise frequency data of the scan signals. In this way, the repetition rate for the scan signals may be adjusted to manage the energy usage of the portable control device and to maintain a sufficient level of monitoring on the range between vehicle and portable control device.

In an embodiment, the signal input is configured to receive a range stop signal from the Electronic Control Unit, and the scan output is configured to send a cease signal to halt emission of the scan signal, and the processor is configured to, in dependence on receipt of the range stop signal, cause the scan output to send the cease signal. In this way, the ranging can be discontinued when range data is no longer required. This is also useful in managing the energy usage of the portable control device.

Optionally, the range data may indicate that the portable control device is: outside the vehicle and within a predetermined range thereof; outside of the vehicle and outside of the predetermined range; or inside the vehicle. The range data may also simply indicate if the portable control device is in a suitable range or not.

In an embodiment, the scan signal is an Radio Frequency signal. The scan response signal may be an Radio Frequency signal. In an embodiment, the scan signal and scan response signal have a frequency between 400 MHz and 500 MHz, and may be 433MHz. In this way, the control system may use the same hardware as used currently for existing access control systems for vehicles, such as those comprising a key fob for locking and unlocking the vehicle. In such a system, the existing key fob may act as the portable control device.

In an embodiment, the control system is configured to operate as or with an access control system, wherein the portable control device is an portable access device configured to control access to the vehicle. Such an access control system may be known and implemented in a vehicle, such that implementing the present control system in a vehicle having such an access control system does not require additional hardware.

According to yet another aspect of the invention, there is provided a method for determining a range from a vehicle to a portable control device associated with the vehicle, on receipt of s range request signal, triggering emission of a scan signal; receiving a scan response signal originating from the portable control device in response to the scan signal; determining range data indicative of the range from the vehicle to the portable access control based on the scan response signal; and outputting the range data. This is a convenient manner of determining the range to a portable control device.

According to a further aspect of the invention, there is provided a method for determining a range from a vehicle to a portable control device associated with the vehicle, receiving a range request signal from an electronic control unit of the vehicle; on receipt of the range request signal, sending an instruction signal to trigger emission of a scan signal; receiving a scan response signal originating from the portable control device in response to the scan signal; in dependence on the scan response signal, determining range data indicative of the range from the vehicle to the portable control device; and outputting the range data to the electronic control unit. In this way, the method provides information of the distance between a portable control device, corresponding to the driver, and the vehicle, to facilitate the operation of autonomous manoeuvres.

Optionally, the method may comprise receiving a range stop signal from the electronic control unit, and in dependence on receipt of the range stop signal, sending an instruction to halt the emission of the scan signal.

According to a still further aspect of the invention, there is provided a ranging system, comprising: a control system according to any preceding claim; and a plurality of antennas configured to emit the scan signal and receive the scan response signal. This is a convenient manner of determining the range to a portable control device.

In an embodiment, the plurality of antennas comprise Radio Frequency antennas. This is a convenient and efficient method of implementing the ranging system.

Optionally, the ranging system may further comprise a portable control device. The portable control device comprises a Radio Frequency portable access device, such as used for locking or unlocking the vehicle doors.

According to another aspect of the invention, there is provided an electronic control unit for a vehicle, the electronic control unit comprising a status input for receiving vehicle status data; a ranging communications channel for requesting and receiving range data, the range data being indicative of a range from the vehicle to a portable control device associated with the vehicle; an output for sending a vehicle control signal to another control system of the vehicle in dependence on the range data; a processor; a memory storing computer executable instructions therein which, when executed by the processor, cause the processor to in dependence on the vehicle status data, request to receive the range data at a first rate or at a second rate, where the second rate is higher than the first rate. In this way, a second rate may be utilised to provide the range with increased temporal accuracy, and the first rate may be used when detecting changes in the range to the portable control device is less relevant. The first rate may be between 400ms and 1500ms, and in one example, is 500ms, and in another example is 1000ms. The second rate may be between 150ms and 350ms, and in an example is 250ms.

According to yet another aspect of the invention, there is provided an electronic control unit for a vehicle, the Electronic Control Unit configured to control a vehicle, the electronic control unit comprising one or more controllers, and comprising a status input for receiving vehicle status data; a ranging communications channel for requesting and receiving range data, the range data being indicative of a range from the vehicle to a portable control device associated with the vehicle; an output for sending a vehicle control signal to another control system of the vehicle in dependence on the range data; a processor; a memory storing computer executable instructions therein which, when executed by the processor, cause the processor to: in dependence on the vehicle status data indicating that the vehicle is stationary, request to receive the range data at a first rate; and in dependence on the vehicle status data indicating that the vehicle is moving, request to receive the range data at a second rate, where the second rate is higher than the first rate. In this way, the higher rate may be used when it is useful to detect changes in the range to the portable control device quickly, while the lower rate may be used to reduce the energy consumption of the portable control device.

Optionally, the range data may indicate that the portable control device is outside the vehicle and within a predetermined range thereof, outside of the predetermined range, or inside the vehicle.

According to a further aspect of the invention, there is provided a vehicle comprising a control system, the ranging system or the electronic control system as described herein.

According to a still further aspect of the invention, there are provided Computer readable instructions which, when executed by a computer, are arranged to perform a method as described herein.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a block diagram of a control system in accordance with an embodiment of the invention;
Figure 2 shows a block diagram of a system in accordance with an embodiment of the invention;
Figure 3 shows a block diagram of a ranging system in accordance with an embodiment of the invention;
Figure 4 shows a flowchart of a method in accordance with an embodiment of the invention;
Figure 5 shows a block diagram of an electronic control system in accordance with an embodiment of the invention;
Figure 6 shows a pulse timeline diagram in accordance with an embodiment of the invention;
Figure 7 shows a vehicle in accordance with an embodiment of the invention.

### DETAILED DESCRIPTION

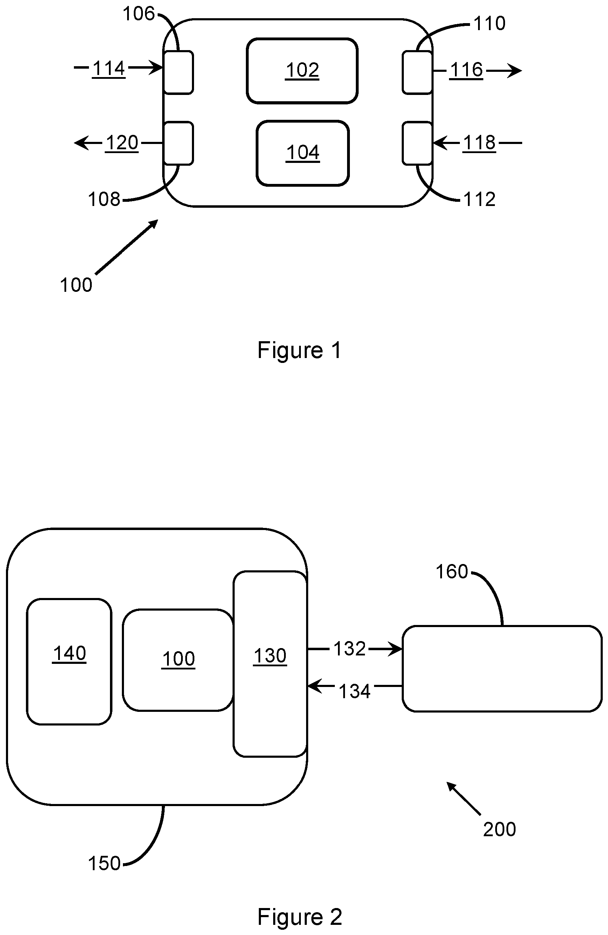

A control system for a vehicle, the control system indicated generally by the reference numeral 100, in accordance with an embodiment of the present invention is described herein with reference to the accompanying Figure 1. The control system 100 is adapted to determine a range from the vehicle to a portable control device associated with the vehicle. The control system 100 comprises a processor 102 and memory 104. The control system further comprises a signal input 106 and a signal output 108, and a scan output 110 and a scan input 112. The signal input 106 is configured to receive a range request signal 114 from an electronic control unit of the vehicle. The scan output 110 is configured to send an instruction signal 116 to trigger emission of a scan signal. The scan input 112 is configured to receive a scan input signal 118 derived from a scan response signal originating from the portable control device in response to the scan signal. The signal output 108 is configured to transmit data to the electronic control unit. The memory 104 stores computer executable instructions (not shown) therein which, when executed by the processor 102, cause the processor 102 to carry out certain actions described herein. In dependence on receipt of the range request signal 114, the processor 102 causes the scan output 110 to send the instruction signal 116. In dependence on the scan response signal, the processor 102 determines range data 120 indicative of the range from the vehicle to the portable control device. The range data 120 is transmitted by the signal output 120 to the electronic control unit.

The range data 120 may specifically indicate the distance to the portable control device 160. The range data 120 may include a classification of the distance to the portable control device in relation to the predetermined requirements for operations. For example, the range data 102 may indicate that the portable access device 160 is outside the vehicle and within a predetermined range thereof; outside of the vehicle and outside of the predetermined range, or inside the vehicle. It will be understood that the classification of the distance to the portable control device 160 may be carried out by the control system 100 or by another electronic control unit within the vehicle. The classification may be further simplified to a "valid" and "invalid" reading, where the "valid" reading indicates that the portable control device 160 is within the specified range and the "invalid" reading indicates that the portable control device 160 is outside the specified range, or that no range data is available.

Referring now to Figure 2, there is shown a system indicated generally by the reference numeral 200. The system 200 comprises a vehicle 150 including the control system 100 described in relation to Figure 1, and a portable control device 160. The portable control device 160 may be a portable access device such as a key fob. The portable control device 160 is adapted to communicate wirelessly with the vehicle 150. The vehicle 150 comprises an electronic control unit 140 and a wireless communication module 130 for communicating with the portable control device 160. In accordance with the description above of the control system 100, the control system 100 causes the wireless communication module 130 to emit a scan signal 132. The scan signal 132 may be broadcast. If the portable control device 160 receives the scan signal 132, it transmits a scan response signal 134. If the portable control device 160 were outside the range of the scan signal 132, it would not receive the scan signal 132 and no scan response 134 signal would be generated. The wireless communication module 130 may be a Radio Frequency (RF) communications module such that the scan signal 132 and scan response signal 134 are RF signals. The wireless communication module 130 may comprises a plurality of antennas. In an example the RF signals are 433 MHz signals. The control system 100 is triggered to cause the scan signal 132 in response to a range request signal 114 from the Electronic Control Unit 140. The wireless communication module 130 may be comprised within and/or form part of the control system 100, which may in turn be comprised within and/or form part of the electronic control unit 140.

For certain autonomous actions of vehicles capable of fully or partially autonomous operation, it is required that the driver or user of the vehicle is outside of the vehicle. These operations may include a park-out manoeuvre, where the vehicle autonomously exits its parking place; and a park-in manoeuvre, where the vehicle parks itself. These operations are controlled by the user from outside of the vehicle, for example via an application on a personal communication device. It may be useful for the control of these operations to include a "dead man's switch", i.e. an action that requires constant input from the user so as to provide a failsafe. If the user's input to the specified action is removed, then the manoeuvre is ceased immediately.

It is also required for the user to be within a certain distance of the vehicle while certain autonomous manoeuvres are taking plan. The vehicle must therefore be able to detect the range from the vehicle to the user. According to the present disclosure, this range information is obtained via communication between the vehicle 150 and a portable control device 160 in the user's possession. The portable control device 160 may be a dedicated device for use in the control of autonomous operations by the vehicle, or may be combined with a portable access device, such as a key fob for locking and an unlocking the vehicle. If the portable control device is combined with a portable access device, conveniently this may be implemented using existing hardware, and similarly the control system may be implemented using existing hardware of the vehicle.

In use, if an autonomous manoeuvre of the vehicle is requested by the user, an electronic control unit 140 of the vehicle takes steps to determine the range to the user. The electronic control unit 140 sends the range request signal 114 to the control system 100. In response to receiving the range request signal 114, the control system 100 sends the instruction signal 116 which results in the scan signal 132 being transmitted from the vehicle. If the portable control device 160 receives the scan signal 132, it generates the scan response signal 134, which is received by the vehicle 150 and converted into the scan input signal 118 for the control system 100. The processor 102 of the control system 100 then processes the scan input signal 118 to determine the range from the vehicle to the portable control device 160, corresponding to the range the user. The range is then transmitted back to the electronic control unit 140 as the range data 120. The range data 120 may be derived from time-of-flight calculations; triangulation based on multiple responses; and/or other suitable mechanisms.

The electronic control unit 140 of the vehicle may determine that range data is not required at that time, and may send a further signal to instruct the control system 100 to stop the ranging operation. The signal input 106 is configured to receive a range stop signal from the Electronic Control Unit 140. On receipt of the range stop signal, the control system is configured to send a cease signal from the scan output 110, wherein the cease signal halts emission of the scan signal 132. The processor may be configured to, in dependence on receipt of the range stop signal, cause the scan output 110 to send the cease signal.

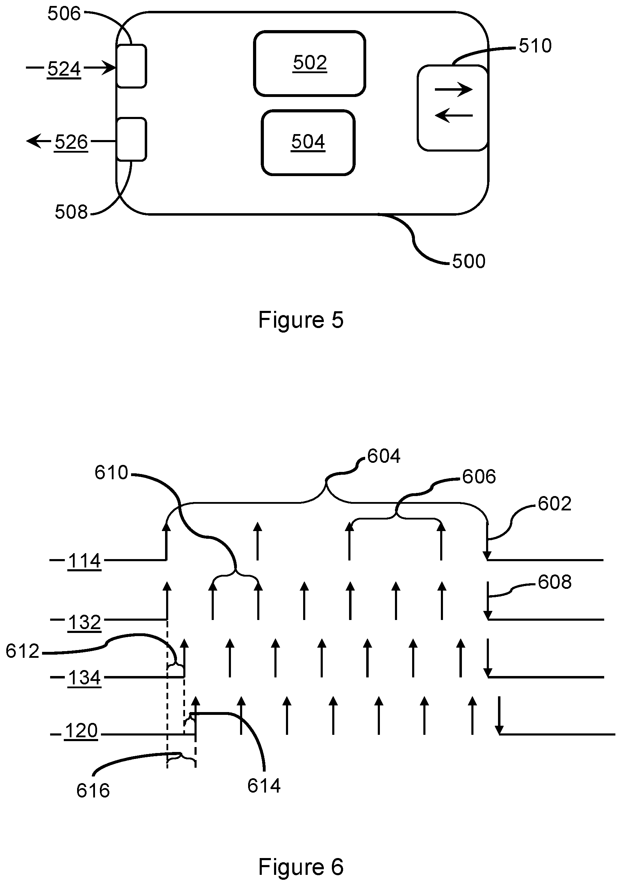

In an example, the ranging is carried out over one or more periods of time before or during a manoeuvre. This may comprise sending repeated signals from the electronic control unit 140 to the control system 100 and thus to the portable control device 160. Additionally or alternatively, the control system 100 may trigger repeated instruction signals 116 in response to one range request signal 114 from the electronic control unit. Additionally or alternatively, a single instruction signal 116 may result in a plurality of scan signals 132 being emitted, or may result in a single scan signal 132 where the signal scan signal comprises a plurality of pulses. The scan signal may comprise a plurality of regularly repeating scan signals. In the cases of a plurality of scan signals or a single scan signal comprising a plurality of pulses, corresponding responses can be received from the portable control device 160, in the form of a plurality of scan response signals 134 or a single scan response signal 134 comprising a plurality of response pulses. It will be understood that referring to a plurality of pulses in a scan signal 132 may be understood to refer to a plurality of scan signals, and similarly, references to a plurality of response pulses may be understood to refer to a plurality of scan response signals 134. An example arrangement discussed in more detail in relation to Figure 6.

The range request signal 114 may comprise configuration data for the scan signal 132. The configuration data may comprise repetition rate data for the scan signals. It may comprise mark-space ratio data, pulse frequency data, and other configuration data.

A portable control device 160 of the type described herein is typically battery operated. Thus, a system that may cause the portable control device 160 to have to emit many response pulses and/or scan response signals may result in undesirably fast depletion of the battery charge. In an example of the present disclosure, the rate at which the portable control device 160 is required to emit scan response signals or pulses is controlled so as to efficiently manage the power usage of the portable control device 160 while also meeting the safety requirements of the autonomous manoeuvre. The rate of emission of scan signals 132 may vary according to the state of the manoeuvre. For example, the rate of emission of scan signals, which may be referred to as the polling rate, may be higher while a vehicle is in motion than when it is stationary. The polling rate while the vehicle is in motion may be between 150ms and 350ms, and in an example is 250ms. The polling rate at other times may be between 400ms and 1500ms, and in one example, is 500ms, and in another example is 1000ms.

A manoeuvre may be divided into five potential states: standby, start-up, manoeuvring, interrupted, and finishing. In the standby state, there is no manoeuvre selected and no action is taken in relation to determining the range to the portable control device 160. In the start-up mode, a user request to carry out an autonomous manoeuvre has been made and before taking action, the range to the electronic control unit 140 is determined. In this way, it can be verified that the user is close enough to the vehicle to allow the requested autonomous manoeuvre. The scan signals 132 are emitted at a first rate in the start-up state. The first rate may be reasonably slow as the vehicle is not moving during this state. The first rate may be between 400ms and 1500ms, and in an example is 1000ms. The scan signals 132 may be stopped as soon as a scan response signal 134 indicates that there is a portable control device 160 within the range of the scan signals 132. The control system 100 may calculate the range to the detected portable control device 160, however this is not essential in the start-up stage. However, if the range is to be detected, the scan signal 132 response signals are stopped once the range has been determined. Once the portable control device 160 has been determined to be within a suitable range of the vehicle, the electronic control unit may start the engine of the vehicle. In this way, the engine is not started when the user is out of range, thus reducing fuel usage, and allowing the user to verify that they do wish to carry out the manoeuvre.

In the manoeuvring state, the vehicle is carrying out the autonomous manoeuvre. In this state, the scan signals 132 are emitted to detect the range from the vehicle to the portable control device 160. The scan signals 132 are emitted at a second rate, which is faster than the first rate used in the start-up state. The second rate may be between 150ms and 350ms, and in an example is 250ms. If the ranging operation indicates that the electronic control unit 140 is outside the desired range, or is inside the vehicle, the manoeuvre will be stopped.

In the interrupted state, the autonomous manoeuvre has been stopped before completion, for example, if the electronic control unit 140 has moved beyond the desired range, of if the dead man's switch is released. In this state, the scan signals 132 are emitted at a third rate for a predefined period of time and then stopped. The third rate is slower than the second rate, and may be the same as the first rate. The third rate may be between 400ms and 1500ms, and in an example is 500ms. In this way, the autonomous manoeuvre may be resumed quickly if the user restarts it quickly, but the battery of the portable control device 160 will not be run-down unnecessarily if restarting the manoeuvre takes longer than the predefined period. The predefined period may be between 0 and 30 seconds, and in an example, it is 5 seconds.

The finishing state is applicable for park-out manoeuvres, the control system determines that the portable control device 160 is located inside the vehicle. This may be accomplished using scan signals 132 at a slower rate, for example the first rate or the third rate.

There could be multiple portable control devices 160 for one vehicle, for example, one for each user of the vehicle. To address this, in an example according to the disclosure, a control module of the vehicle, such as the control system 100 or the electronic control unit 140 stores identification information for the portable control device 160 most recently used with the vehicle. Where the portable control device 160 is a portable access device for un/locking the vehicle, the identification information of the portable control device 160 last used to unlock the vehicle is stored. This identification information may be referred to as the PairedKeyID. The range to the portable control device 160 identified by the PairedKeyID will be checked. In the case that two users are in the vehicle with two portable control devices 160, then PairedKeyID will be used to identify the portable control device 160 for controlling. If the portable control device 160 is not within valid range, the vehicle will not move, and the user will be informed that the portable control device 160 was not found. This will allow the user to swap the portable control device 160 and bring the portable control device 160 identified by the PairedKeyID into range.

The signal input configured to receive a range request signal from an electronic control unit of the vehicle may comprise the processor having an electrical input for receiving the range request signal, the scan input configured to receive a scan input signal may comprise the processor having an electrical input for receiving the scan input signal; the scan output configured to send an instruction signal may comprise the processor having an electrical output to trigger emission of the scan signal from the vehicle, and the signal output may comprise the processor having an electrical output for transmitting data to the electronic control unit. The processor may comprise one or more processors, the electrical inputs may be the same electrical input, the electrical output may be the same electrical output, and the electrical input and electrical output may be a combined input/output port.

The portable control device 160 may be a portable access device such as a key fob. The electronic control unit 140 may be a telematics control unit, which acts as a communication gateway between a user's mobile communication device and the vehicle network. In this way, a user can request an autonomous manoeuvre via an application on the device, such as their mobile phone. The message will be received by the telematics control unit, which will in turn instruct a control system according to the disclosure to determine the range to the portable control device 160. Then once the range is determined, the control system may transmit it, for example as the range data 120, to the telematics unit, or to another relevant electronic control unit. In an example, the range data 120 is sent to a Near Field Sensor control unit, either directly from the control system 100 or relayed by the telematics unit or another electronic control unit. The Near Field Sensor control unit determines if the range data meets the requirements for the manoeuvre, and controls the manoeuvre as appropriate, example, starting or continuing the manoeuvre when the range requirements are met, or halting the manoeuvre if the range requirements are not met, for example if the range increases beyond the required value. It will be understood that determining if the range requirements are met may be carried out by any suitable control unit or control system within the vehicle.

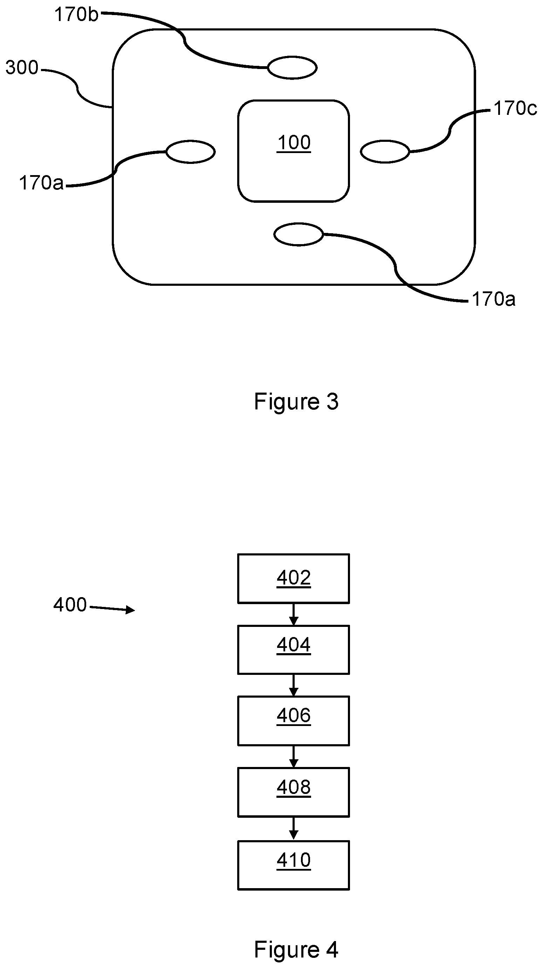

Referring now to Figure 3, there is shown block diagram of a ranging system according to an embodiment of the invention. The ranging system 300 comprises the control system 100 as described herein and a plurality of antennas 170a, 170b, 170c, 170d. In an example, a vehicle may comprise a plurality of antennas for use in a remote access system with a key fob. Such a remote access system may be a Radio Frequency system, which operates at 433 Mhz. Such a remote access system may comprise a Radio Frequency controller and/or a radio frequency actuator. The antennas may be located, for example, on the front bumper/fender, on the rear bumper/fender, in a driver's side door, in a passenger side door, and internal to the vehicle. In this way, by combining readings from the various antennas, the remote access system may determine the location of the key fob, for example if it is in the vehicle. The control system 100 may utilise aspects of an existing remote access system in a vehicle, including instructing RF antennas to broadcast the scan signals 132, and using the key fob as the portable control device 160. As such, the ranging system 300 may utilise the antennas of an existing remote access system as the plurality of antennas 170a, 170b, 170c, 170d. In this way, the control system 100 and ranging system 300 may be implemented in a vehicle comprising such a remote access system without the modification of the hardware used.

Referring now to Figure 4, there is shown a method, indicated generally by the reference numeral 400, for determining a range from a vehicle to a portable access device associated with the vehicle. The method may be implemented by the control system 100 described herein in relation to the previous figures. The method 400 comprises, at block 402, receiving a range request signal from an electronic control unit of the vehicle. At block 404, on receipt of the range request signal, the method 400 comprises sending an instruction signal to trigger emission of a scan signal. At block 406, the method 400 comprises receiving a scan response signal originating from the portable control device in response to the scan signal. The method 400 further comprises, at block 408, determining range data indicative of the range from the vehicle to the portable control device in dependence on the scan response signal. At block 410, the method 400 comprises, outputting the range data to the electronic control unit. The method 400 may further comprise receiving a range stop signal from the electronic control unit, and in dependence on receipt of the range stop signal, sending an instruction to halt the emission of the scan signal.

Referring now to Figure 5, there is shown a block diagram of an electronic control unit for a vehicle, indicated generally the reference numeral 500, according to an embodiment of the disclosure. The electronic control unit 500 is configured to control a vehicle or aspects of a vehicle. The electronic control unit 500 comprises a processor 502 and a memory 504 which stores computer executable instructions therein which, when executed by the processor 502, cause the processor to take certain actions. The electronic control unit 500 comprises a status input 506 for receiving vehicle status data 524. The electronic control unit 500 comprises a ranging communications channel 510 for requesting and receiving range data, where the range data is indicative of a range from the vehicle to a portable control device associated with the vehicle. The electronic control unit 500 comprises an output for sending a vehicle control signal to another control system of the vehicle in dependence on the range data. Via the computer executable instructions stored on the memory 504, the processor 502 is configured to, in dependence on the vehicle status data 524 indicating that the vehicle is stationary, request to receive the range data at a first rate; and in dependence on the vehicle status data 524 indicating that the vehicle is moving, request to receive the range data at a second rate, where the second rate is higher than the first rate. The first rate may be between 400ms and 1500ms, and in one example, is 500ms, and in another example is 1000ms, The second rate may between 150ms and 350ms, and in an example is 250ms.

The range data may indicate that the portable access device is outside the vehicle and within a predetermined range thereof, outside of the predetermined range, or inside the vehicle. The ranging communications channel 510 may comprise a ranging output for sending a range request and a ranging input for receiving the range data. The electronic control unit 500 may correspond to the telematics control unit described herein.

The electronic control unit 500 described herein in relation to Figure 5 may correspond to the electronic control unit 140 described herein in relation to Figure 2. The electronic control unit 500 may correspond to a combination of the electronic control unit 140 and the control system 100 described in relation to Figures 1 and 2. The electronic control unit 500 may correspond to a combination of the electronic control unit 140 and the ranging system 300 described in relation to Figure 3.

Referring now to Figure 6, there is shown a signal timeline diagram according to an embodiment of the invention. The signal timeline diagram may represent an example of range request signalling that may be carried out by the systems and methods described herein. The signal timeline diagram shows a plurality of range request signals 114 received by the control system 100. There is further shown a range stop signal 602 which is sent when the control system 100 is instructed to stop determining the range to the portable control device 160. The time between the first range request signal and the range stop signal 602 may be referred to as the scan request time 604. This is typically linked to the time for the manoeuvre to be completed. The time between adjacent range request signals 114 may be referred to as the scan request rate 606. The signal timeline diagram shows a plurality of scan signals 132 triggered by the control system 100, terminating in a cease signal 608. The time between adjacent scan signals 132 may be referred to as the polling rate 610. The polling rate 610 may be based on the wireless communication hardware and software used for the scan signals 132, the vehicle configuration, and so on. The signal timeline diagram shows a plurality of scan response signals 134 sent by a portable control device 160 in response to the scan signals 132. The time between a scan =signal 132 and a resulting scan response signal 134 may be referred to as the response time 612. The response time 612 may depend on the operational systems including, operation frequency, hardware and software of the portable control device 160. The signal timeline diagram shows a plurality of range data 120 signals transmitted by the control system 100 to the electronic control system 140. The time between the scan response signal 134 and the corresponding range data signal 120 may be referred to as the range processing time 614. The range processing time 614 may depend on the operational systems of the control system 100, including the hardware (processor 102) and software (the computer readable instructions stored on memory 104). The time between a range request signal and its corresponding range data signal may be referred to as the latency 616.

The polling rate may change depending on the state of the manoeuvre. In an example, the control system is configured to provide a polling rate of between 150ms and 1500ms. A manoeuvring polling rate may be between 150ms and 350ms, while a stationary polling rate may be between 300ms and 1500ms, and in an example is between 400ms to 840ms. The control system is configured to provide a a latency of 800ms to 2000ms. In a particular example, the polling rate is between 300ms to 750ms with a latency of 1000ms. In this way, the autonomous manoeuvre can be terminated within 1 second if the portable control device 160 is detected to be outside the specified range.

The scan request rate corresponds to the first rate, second rate and third rates described herein. The scan request rate may depend on the state of the autonomous manoeuvre of the vehicle.

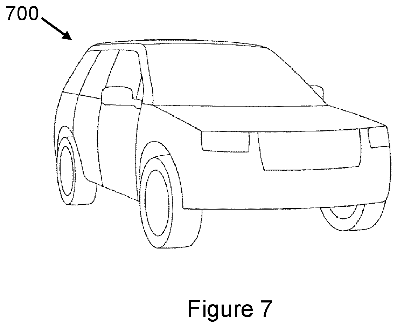

As shown in Figure 7, the control system 100 is installed in a vehicle 700. The vehicle 700 in the present embodiment is an automobile, such as a wheeled vehicle, but it will be understood that the control system 100 may be used in other types of vehicle, such as aircraft, watercraft, or the like.

The systems described herein, such as the control system 100, ranging system 300, electronic control unit 140, 500 may comprise one processor, although it will be appreciated that this is merely illustrative. The processor may comprise processing means and may comprise memory means. The systems may comprise memory, such as memory 104, 504. The processing means may be one or more electronic processing device which operably executes computer-readable instructions. The memory means may be one or more memory device. The memory means may be electrically coupled to the processing means. The memory means may be configured to store instructions, and the processing means may be configured to access the memory means and execute the instructions stored thereon. In particular, the memory may comprise computer-readable instructions which, when executed by the processor, perform the method 400 as described herein in relation to Figure 4.

The systems described herein comprise inputs and outputs. The inputs may comprise an electrical input of the system and may be electrically connected to an electrical input of a processor of the systems. The outputs may comprise an electrical output of the system and may be electrically connected to an electrical output of the processor.

The present invention relates to a control system for a vehicle, for determining a range from the vehicle to a portable control device associated with the vehicle. The control system comprises a signal input for receiving a range request signal; a scan output for triggering emission of a scan signal; a scan input for receiving a scan response signal originating from the portable control device in response to the scan signal; a signal output for transmitting data to the electronic control unit; where in dependence on receipt of the range request signal, the scan signal is sent; in dependence on the scan response signal, range data indicative of the range from the vehicle to the portable control device is determined; and the range data is output. The control system may operate with an existing access control system such that the key fob of the access control system may operate as the portable control device.

For some autonomous manoeuvres, it may be required to find out the range from a vehicle to the driver/user who is outside the vehicle. The can be done using a control system similar or corresponding to an existing access control system for remotely locking and unlocking the vehicle, including the portable access device such as a key fob. By triggering signals from the vehicle to the key fob and measuring the responses, the range to the key fob can be determined. By adjusting of the rate of the signals from the vehicle to the key fob, the energy usage of the battery of the key fob can be managed.

Aspects of the present disclosure allow the substantially continuous detection of the location of the user of a vehicle while the vehicle carries out an autonomous manoeuvre, such as a park-out, and to ensure that if the user is outside of a predetermined radius of the vehicle, the vehicle is not moving.

## Claims

1. A control system (100) for a vehicle, the control system (100) being adapted to determine a range from the vehicle to a portable control device (160) associated with the vehicle when performing an autonomous vehicle manoeuvre,
the control system (100) comprising one or more controllers, the control system (100) comprising:
a signal input configured to receive a range request signal (114) from an electronic control unit (140) of the vehicle;
a scan output configured to send an instruction signal to trigger emission of a scan signal from the vehicle;
a scan input configured to receive a scan input signal derived from a scan response signal originating from the portable control device (160) in response to the scan signal;
a signal output for transmitting data to the electronic control unit (140);
a processor; and
a memory storing computer executable instructions therein which, when executed by the processor, cause the processor to:
in dependence on receipt of the range request signal (114), cause the scan output to send the instruction signal to repeatedly emit the scan signal at a polling rate;
in dependence on the scan response signal, determine range data indicative of the range from the vehicle to the portable control device (160); and
cause the signal output to output the range data to the electronic control unit (140); wherein
the polling rate varies in dependence on a state of the autonomous vehicle manoeuvre.

2. A control system (100) according to claim 1 wherein the polling rate is higher while the vehicle is in motion than when the vehicle is stationary.

3. A control system (100) according to claim 2 wherein the polling rate while the vehicle is in motion is between 150ms and 350ms, optionally 250ms, and/or wherein the polling rate while the vehicle is stationary is between 400ms and 1500ms, optionally 500ms or 1000ms.

4. A control system (100) according to any one of the preceding claims wherein the autonomous manoeuvre has five potential states: a standby state, start-up state, a manoeuvring state, an interrupted state, and a finishing state.

5. A control system (100) according to claim 4 wherein in the standby state no action is taken in relation to determining the range to the portable control device (160).

6. A control system (100) according to claim 5 wherein in the scan signals are emitted at a first rate in the start-up state, the first rate being between 400ms and 1500ms, optionally 1000ms.

7. A control system (100) according to claim 6 wherein, in the start-up state the scan signals are stopped as soon as a scan response signal indicates that there is a portable control device (160) within the range of the scan signals.

8. A control system (100) according to claim 6 or claim 7 wherein in the manoeuvring state the vehicle is carrying out an autonomous manoeuvre, and the scan signals are emitted at a second rate, which is faster than the first rate used in the start-up state, the second being between 150ms and 350ms, optionally 250ms, and wherein if the control system (100) determined that the electronic control unit (140) is outside a desired range, or is inside the vehicle, the manoeuvre will be stopped.

9. A control system (100) according to claim 8 wherein, in the interrupted state, the autonomous manoeuvre has been stopped before completion, and the scan signals are emitted at a third rate for a predefined period of time and then stopped, the third rate being slower than the second rate and optionally the same as the first rate.

10. A control system (100) according to claim 9 wherein, in the finishing state, which is applicable for park-out manoeuvres where the vehicle autonomously exits its parking place, the control system (100) determines that the portable control device (160) is located inside the vehicle using scan signals at the first rate or the third rate.

11. A control system (100) according to claim 1 wherein the range request signal (114) comprises configuration data for configuring the scan signal and wherein the configuration data comprises rate data for the polling rate of the scan signals.

12. A method for determining a range from a vehicle to a portable control device (160) associated with the vehicle when performing an autonomous vehicle manoeuvre,
receiving a range request signal (114) from an electronic control unit (140) of the vehicle;
on receipt of the range request signal (114), sending an instruction signal to trigger repeated emission of a scan signal at a polling rate;
receiving a scan response signal originating from the portable control device (160) in response to the scan signal;
in dependence on the scan response signal, determining range data indicative of the range from the vehicle to the portable control device (160); and
outputting the range data to the electronic control unit (140) wherein
the polling rate varies in dependence on a state of the autonomous vehicle manoeuvre.

13. An electronic control unit (140) for a vehicle, the electronic control unit (140) configured to control a vehicle, the electronic control unit (140) comprising one or more controllers, and comprising
a status input for receiving vehicle status data;
a ranging communications channel for requesting and receiving range data, the range data being indicative of a range from the vehicle to a portable control device (160) associated with the vehicle;
an output for sending a vehicle control signal to another control system of the vehicle in dependence on the range data;
a processor;
a memory storing computer executable instructions therein which, when executed by the processor, cause the processor to:
in dependence on the vehicle status data indicating that the vehicle is stationary, request to receive the range data at a first rate; and
in dependence on the vehicle status data indicating that the vehicle is moving, request to receive the range data at a second rate, where the second rate is higher than the first rate.

14. An electronic control unit (140) according to claim 13 wherein the range data may indicate that the portable control device (160) is outside the vehicle and within a predetermined range thereof, outside of the predetermined range, or inside the vehicle.

15. A vehicle comprising a control system (100) according to any of claims 1 to 11, or the electronic control unit according to any one of claims 13 or 14.

## Patentansprüche

1. Steuersystem (100) für ein Fahrzeug, wobei das Steuersystem (100) dazu ausgelegt ist, bei Durchführung eines autonomen Fahrzeugmanövers eine Reichweite von dem Fahrzeug zu einer dem Fahrzeug zugeordneten tragbaren Steuervorrichtung (160) zu bestimmen,
wobei das Steuersystem (100) eine oder mehrere Steuerungen umfasst, wobei das Steuersystem (100) umfasst:
einen Signaleingang, der dazu konfiguriert ist, ein Reichweitenanforderungssignal (114) von einer elektronischen Steuereinheit (140) des Fahrzeugs zu empfangen;
einen Scan-Ausgang, der dazu konfiguriert ist, ein Anweisungssignal zu senden, um die Emission eines Scan-Signals vom Fahrzeug auszulösen;
einen Scan-Eingang, der dazu konfiguriert ist, ein Scan-Eingangssignal zu empfangen, das von einem Scan-Antwortsignal abgeleitet ist, das von der tragbaren Steuervorrichtung (160) als Antwort auf das Scan-Signal stammt;
einen Signalausgang zum Übertragen von Daten an die elektronische Steuereinheit (140);
einen Prozessor; und
einen Speicher, in dem computerausführbare Anweisungen gespeichert sind, die, wenn sie von dem Prozessor ausgeführt werden, den Prozessor veranlassen zum:
Bewirken, in Abhängigkeit vom Empfang des Reichweitenanforderungssignals (114), dass der Scan-Ausgang das Anweisungssignal sendet, um das Scan-Signal wiederholt mit einer Abfragerate zu emittieren;
Bestimmen, in Abhängigkeit von dem Scan-Antwortsignal, von Reichweitendaten, die die Reichweite von dem Fahrzeug zu der tragbaren Steuervorrichtung (160) angeben; und
Bewirken, dass der Signalausgang die Reichweitendaten an die elektronische Steuereinheit (140) ausgibt; wobei
die Abfragerate in Abhängigkeit von einem Zustand des autonomen Fahrzeugmanövers variiert.

2. Steuersystem (100) nach Anspruch 1, wobei die Abfragerate höher ist, während das Fahrzeug in Bewegung ist, als wenn das Fahrzeug stillsteht.

3. Steuersystem (100) nach Anspruch 2, wobei die Abfragerate, während das Fahrzeug in Bewegung ist, zwischen 150 ms und 350 ms beträgt, optional 250 ms, und/oder wobei die Abfragerate, während das Fahrzeug stillsteht, zwischen 400 ms und 1500 ms beträgt, optional 500 ms oder 1000 ms.

4. Steuersystem (100) nach einem der vorstehenden Ansprüche, wobei das autonome Manöver fünf potentielle Zustände aufweist: einen Bereitschaftszustand, einen Startzustand, einen Manövrierzustand, einen unterbrochenen Zustand und einen Abschlusszustand.

5. Steuersystem (100) nach Anspruch 4, wobei im Bereitschaftszustand keine Maßnahme in Bezug auf die Bestimmung der Reichweite zu der tragbaren Steuervorrichtung (160) ergriffen wird.

6. Steuersystem (100) nach Anspruch 5, wobei in dem Scan Signale in dem Startzustand mit einer ersten Rate emittiert werden, wobei die erste Rate zwischen 400 ms und 1500 ms liegt, optional 1000 ms.

7. Steuersystem (100) nach Anspruch 6, wobei im Startzustand die Scan-Signale gestoppt werden, sobald ein Scan-Antwortsignal angibt, dass sich eine tragbare Steuervorrichtung (160) innerhalb der Reichweite der Scan-Signale befindet.

8. Steuersystem (100) nach Anspruch 6 oder Anspruch 7, wobei das Fahrzeug in dem Manövrierzustand ein autonomes Manöver durchführt, und die Scan-Signale mit einer zweiten Rate emittiert werden, die schneller ist als die erste Rate, die in dem Startzustand verwendet wurde, wobei die zweite zwischen 150 ms und 350 ms, optional 250 ms beträgt, und wobei, falls das Steuersystem (100) bestimmt, dass die elektronische Steuereinheit (140) außerhalb einer gewünschten Reichweite liegt oder sich innerhalb des Fahrzeugs befindet, das Manöver gestoppt wird.

9. Steuersystem (100) nach Anspruch 8, wobei das autonome Manöver im unterbrochenen Zustand vor der vollständigen Durchführung gestoppt wurde und die Scan-Signale mit einer dritten Rate für eine vordefinierte Zeitdauer emittiert und dann gestoppt werden, wobei die dritte Rate langsamer als die zweite Rate und optional dieselbe wie die erste Rate ist.

10. Steuersystem (100) nach Anspruch 9, wobei das Steuersystem (100) im Abschlusszustand, der für Ausparkmanöver anwendbar ist, bei denen das Fahrzeug seinen Parkplatz autonom verlässt, bestimmt, dass sich die tragbare Steuervorrichtung (160) bei Verwendung von Scan-Signalen mit der ersten Rate oder der dritten Rate innerhalb des Fahrzeugs befindet.

11. Steuersystem (100) nach Anspruch 1, wobei das Reichweitenanforderungssignal (114) Konfigurationsdaten zum Konfigurieren des Scan-Signals umfasst und wobei die Konfigurationsdaten Ratendaten für die Abfragerate der Scan-Signale umfassen.

12. Verfahren zum Bestimmen einer Reichweite von einem Fahrzeug zu einer dem Fahrzeug zugeordneten tragbaren Steuervorrichtung (160) beim Durchführen eines autonomen Fahrzeugmanövers,
Empfangen eines Reichweitenanforderungssignals (114) von einer elektronischen Steuereinheit (140) des Fahrzeugs;
bei Empfang des Reichweitenanforderungssignals (114), Senden eines Anweisungssignals zum Auslösen der wiederholten Emission eines Scan-Signals mit einer Abfragerate;
Empfangen eines Scan-Antwortsignals, das von der tragbaren Steuervorrichtung (160) stammt, als Antwort auf das Scan-Signal;
in Abhängigkeit von dem Scan-Antwortsignal, Bestimmen von Reichweitendaten, die die Reichweite von dem Fahrzeug zu der tragbaren Steuervorrichtung (160) angeben; und
Ausgeben der Reichweitendaten an die elektronische Steuereinheit (140), wobei
die Abfragerate in Abhängigkeit von einem Zustand des autonomen Fahrzeugmanövers variiert.

13. Elektronische Steuereinheit (140) für ein Fahrzeug, wobei die elektronische Steuereinheit (140) dazu konfiguriert ist, ein Fahrzeug zu steuern, wobei die elektronische Steuereinheit (140) eine oder mehrere Steuerungen umfasst, und umfassend
einen Statuseingang zum Empfangen von Fahrzeugstatusdaten;
einen Reichweiten-Kommunikationskanal zum Anfordern und Empfangen von Reichweitendaten, wobei die Reichweitendaten eine Reichweite von dem Fahrzeug zu einer dem Fahrzeug zugeordneten tragbaren Steuervorrichtung (160) angeben;
einen Ausgang zum Senden eines Fahrzeugsteuersignals an ein anderes Steuersystem des Fahrzeugs in Abhängigkeit von den Reichweitendaten;
einen Prozessor;
einen Speicher, in dem computerausführbare Anweisungen gespeichert sind, die, wenn sie von dem Prozessor ausgeführt werden, den Prozessor veranlassen zum:
Anfordern des Empfangs der Reichweitendaten mit einer ersten Rate, in Abhängigkeit von den Fahrzeugstatusdaten, die angeben, dass das Fahrzeug stillsteht; und
Anfordern des Empfangs der Reichweitendaten mit einer zweiten Rate, in Abhängigkeit von den Fahrzeugstatusdaten, die angeben, dass sich das Fahrzeug bewegt, wobei die zweite Rate höher ist als die erste Rate.

14. Elektronische Steuereinheit (140) nach Anspruch 13, wobei die Reichweitendaten angeben können, dass sich die tragbare Steuervorrichtung (160) außerhalb des Fahrzeugs und innerhalb einer vorgegebenen Reichweite von diesem, außerhalb der vorbestimmten Reichweite oder innerhalb des Fahrzeugs befindet.

15. Fahrzeug, umfassend ein Steuersystem (100) nach einem der Ansprüche 1 bis 11, oder elektronische Steuereinheit nach einem der Ansprüche 13 oder 14.

## Revendications

1. Système de commande (100) destiné à un véhicule, le système de commande (100) étant conçu pour déterminer une plage allant du véhicule à un dispositif de commande portable (160) associé au véhicule lors de la mise en œuvre d'une manœuvre de véhicule autonome,
le système de commande (100) comprenant un ou plusieurs organes de commande, le système de commande (100) comprenant :
une entrée de signal configurée pour recevoir un signal de demande de plage (114) en provenance d'une unité de commande électronique (140) du véhicule ;
une sortie de balayage configurée pour envoyer un signal d'instruction pour déclencher l'émission d'un signal de balayage à partir du véhicule ;
une entrée de balayage configurée pour recevoir un signal d'entrée de balayage dérivé d'un signal de réponse de balayage ayant pour origine le dispositif de commande portable (160) en réponse au signal de balayage ;
une sortie de signal permettant de transmettre des données à l'unité de commande électronique (140) ;
un processeur ; et
une mémoire stockant des instructions exécutables par ordinateur à l'intérieur de celle-ci qui, lorsqu'elles sont exécutées par le processeur, amènent le processeur à :
en dépendance de la réception du signal de demande de plage (114), amener la sortie de balayage à envoyer le signal d'instruction pour émettre de manière répétée le signal de balayage selon une fréquence d'interrogation ;
en dépendance du signal de réponse de balayage, déterminer des données de plage indiquant la plage allant du véhicule au dispositif de commande portable (160) ; et
amener la sortie de signal à délivrer en sortie les données de plage à l'unité de commande électronique (140) ; dans lequel
la fréquence d'interrogation varie en dépendance d'un état de la manœuvre de véhicule autonome.

2. Système de commande (100) selon la revendication 1 dans lequel la fréquence d'interrogation est plus élevée lorsque le véhicule est en mouvement que lorsque le véhicule est stationnaire.

3. Système de commande (100) selon la revendication 2 dans lequel la fréquence d'interrogation lorsque le véhicule est en mouvement est entre 150 ms et 350 ms, facultativement est de 250 ms, et/ou dans lequel la fréquence d'interrogation lorsque le véhicule est stationnaire est entre 400 ms et 1500 ms, facultativement est de 500 ms ou de 1000 ms.

4. Système de commande (100) selon l'une quelconque des revendications précédentes dans lequel la manœuvre autonome a cinq états potentiels : un état d'attente, un état de démarrage, un état de manœuvre, un état interrompu et un état de fin.

5. Système de commande (100) selon la revendication 4 dans lequel dans l'état d'attente aucune action n'est prise en relation avec la détermination de la plage jusqu'au dispositif de commande portable (160).

6. Système de commande (100) selon la revendication 5 dans lequel les signaux de balayage sont émis à une première fréquence dans l'état de démarrage, la première fréquence étant entre 400 ms et 1500 ms, facultativement étant de 1000 ms.

7. Système de commande (100) selon la revendication 6 dans lequel, dans l'état de démarrage les signaux de balayage sont arrêtés dès qu'un signal de réponse de balayage indique qu'il y a un dispositif de commande portable (160) dans la plage des signaux de balayage.

8. Système de commande (100) selon la revendication 6 ou la revendication 7 dans lequel dans l'état de manœuvre le véhicule réalise une manœuvre autonome, et les signaux de balayage sont émis à une deuxième fréquence, qui est plus rapide que la première fréquence utilisée dans l'état de démarrage, la deuxième étant entre 150 ms et 350 ms, facultativement étant de 250 ms, et dans lequel si le système de commande (100) a déterminé que l'unité de commande électronique (140) est à l'extérieur d'une plage souhaitée, ou est à l'intérieur du véhicule, la manœuvre sera arrêtée.

9. Système de commande (100) selon la revendication 8 dans lequel, dans l'état interrompu, la manœuvre autonome s'est arrêtée avant achèvement, et les signaux de balayage sont émis à une troisième fréquence pendant un laps de temps prédéfini, puis arrêtés, la troisième fréquence étant plus lente que la deuxième fréquence et facultativement identique à la première fréquence.

10. Système de commande (100) selon la revendication 9 dans lequel, dans l'état de fin, qui est applicable pour des manœuvres de sortie de stationnement où le véhicule quitte de manière autonome sa place de stationnement, le système de commande (100) détermine que le dispositif de commande portable (160) est localisé à l'intérieur du véhicule à l'aide des signaux de balayage à la première fréquence ou à la troisième fréquence.

11. Système de commande (100) selon la revendication 1 dans lequel le signal de demande de plage (114) comprend des données de configuration permettant de configurer le signal de balayage et dans lequel les données de configuration comprennent des données de fréquence pour la fréquence d'interrogation des signaux de balayage.

12. Procédé permettant de déterminer une plage allant d'un véhicule à un dispositif de commande portable (160) associé au véhicule lors de la mise en œuvre d'une manœuvre de véhicule autonome,
la réception d'un signal de demande de plage (114) en provenance d'une unité de commande électronique (140) du véhicule ;
à la réception du signal de demande de plage (114), l'envoi d'un signal d'instruction pour déclencher une émission répétée d'un signal de balayage selon une fréquence d'interrogation ;
la réception d'un signal de réponse de balayage ayant pour origine le dispositif de commande portable (160) en réponse au signal de balayage ;
en dépendance du signal de réponse de balayage, la détermination de données de plage indiquant la plage allant du véhicule au dispositif de commande portable (160) ; et
la sortie des données de plage vers l'unité de commande électronique (140) dans lequel
la fréquence d'interrogation varie en dépendance d'un état de la manœuvre de véhicule autonome.

13. Unité de commande électronique (140) destinée à un véhicule, l'unité de commande électronique (140) étant configurée pour commander un véhicule, l'unité de commande électronique (140) comprenant un ou plusieurs organes de commande, et comprenant
une entrée de statut permettant de recevoir des données de statut de véhicule ;
un canal de communication de télémétrie permettant de demander et de recevoir des données de plage, les données de plage indiquant une plage allant du véhicule à un dispositif de commande portable (160) associé au véhicule ;
une sortie permettant d'envoyer un signal de commande de véhicule à un autre système de commande du véhicule en dépendance des données de plage ;
un processeur ;
une mémoire stockant des instructions exécutables par ordinateur à l'intérieur de celle-ci qui, lorsqu'elles sont exécutées par le processeur, amènent le processeur à :
en dépendance des données de statut de véhicule indiquant que le véhicule est stationnaire, demander de recevoir les données de plage à une première fréquence ; et
en dépendance des données de statut de véhicule indiquant que le véhicule est en mouvement, demander de recevoir les données de plage à une deuxième fréquence, où la deuxième fréquence est supérieure à la première fréquence.

14. Unité de commande électronique (140) selon la revendication 13 dans laquelle les données de plage peuvent indiquer que le dispositif de commande portable (160) est à l'extérieur du véhicule et dans les limites d'une plage prédéterminée de celui-ci, à l'extérieur de la plage prédéterminée, ou à l'intérieur du véhicule.

15. Véhicule comprenant un système de commande (100) selon l'une quelconque des revendications 1 à 11, ou l'unité de commande électronique selon l'une quelconque des revendications 13 ou 14.
